# EUROPEAN PATENT SPECIFICATION

(11) **EP 1 718 500 B1**
(45) Date of publication and mention of the grant of the patent: **02.04.2008**
(21) Application number: 05711023.1
(22) Date of filing: 02.02.2005
(51) Int. Cl.: B60R 16/08

(54) **AIR COMPRESSOR SYSTEM FOR VEHICLES AND A METHOD FOR AIR PRESSURE CONTROL**
LUFTKOMPRESSORSYSTEM FÜR FAHRZEUGE UND VERFAHREN ZUR LUFTDRUCKSTEUERUNG
SYSTEME DE COMPRESSEUR D'AIR POUR VEHICULE ET PROCEDE DE COMMANDE DE PRESSION D'AIR

(30) Priority: 18.02.2004 SE 0400363
(43) Date of publication of application: 08.11.2006
(73) Proprietor: Scania CV Aktiebolag (publ), 151 87 Södertälje (SE)
(72) Inventor: MEDBERG, Leo, S-641 52 Katrineholm (SE); LUNDGREN, Martin, S-745 34 Enköping (SE)
(74) Representative: Sjögren Paulsson, Stina
(86) International application number: PCT/SE2005/000134
(87) International publication number: WO 2005/082675

(56) References cited:
- EP-A1- 0 349 691
- WO-A1-20/05018965
- GB-A- 1 357 696
- SE-C2- 525 228
- US-A- 5 906 480
- US-A- 6 036 449

## Description

### Technical field

The present invention relates to a method for air pressure control for vehicles with compressed air systems, and a compressed air system, whereby the compressed air system is prepared for future pressure offtake. The closest prior art is represented by US-Patent 6036449.

### Background

Heavy vehicles such as trucks and buses usually have brake systems powered by compressed air. Systems for other consumers such as level regulating systems may also be powered by compressed air. Compressed air reservoirs in compressed air systems of heavy vehicles maintain, when they are filled and the vehicle is not consuming compressed air, a predetermined pressure which in such cases is usually called the working pressure,

When a vehicle consumes compressed air in known compressed air systems, the pressure in its compressed air reservoirs decreases to a lower limit value at which the vehicle's compressor comes into action to refill the compressed air reservoirs to the normal working pressure, after which the compressor switches off.

When a bus in urban traffic reaches a stopping point and at least one door is opened to allow passengers to board or alight, the bus driver may cause the bus to "kneel" in order to facilitate boarding or alighting, thereby reducing the air pressure in the air suspension. When the driver thereafter closes the doors of the bus, the air suspension is filled up to its normal working pressure, thereby emptying the compressed air reservoir connected to the air suspension. Thereupon the compressor starts up to refill the compressed air reservoir of the air suspension at the same time as the bus moves off from the stopping point.

A problem with the aforesaid known compressed air systems is that the compressor which is driven by the vehicle's engine may require power of up to about 10 hk, i.e. about 7.4 kW, thereby reducing correspondingly the power available for accelerating from the stopping point, which means that the bus will take a longer time to reach the speed at which other traffic is moving in the same direction. In the case of urban buses with short distances between stopping points and "kneeling" at each stopping point, it may even be difficult to build up normal working pressure between stopping points.

A further problem with known compressed air systems arises when a trailer whose compressed air reservoirs are empty has to be connected to a tractor vehicle, entailing the tractor vehicle's compressed air reservoir for the trailer being emptied when the trailer is connected to the tractor vehicle, without the trailer's compressed air reservoirs being filled sufficiently to enable the trailer's parking brakes to be released. Thus the tractor vehicle's compressor has to fill the reservoirs up until a sufficient pressure level is reached.

The document WO 2005/018965 A1, published on 3 March 2005, discloses a compressed air system for vehicles whereby the compressed air system comprises at least one compressed air reservoir, a compressor intended for filling the compressed air reservoir, and a control unit regulating the filling of the compressed air reservoir whereby the compressed air system further comprises a signal unit designed to when activated send a signal representing a future pressure offtake and thereby initiating a filling of the compressed air reservoir up to a predetermined sufficient or optimal pressure higher than a predetermined minimum value before a compressed air offtake.

### Brief description of the invention

The problems of the compressor being in operation during acceleration from a stopping point and of the trailer's compressed air reservoirs not being filled sufficiently to enable the trailer's parking brakes to be released are solved according to the invention, which is defined by the features of claim 1 and method claim 9, by arranging a compressed air system for vehicles whereby the compressed air system comprises at least one compressed air reservoir, a compressor intended to fill the compressed air reservoir, and a control unit regulating the filling of the compressed air reservoir, and whereby the compressed air system further comprises a signal unit initiating overfilling of the compressed air reservoir before a compressed air offtake, and by arranging a method for air pressure control for vehicles with compressed air systems, whereby the compressed air system is prepared for future pressure offtake, and whereby a signal representing a future pressure offtake is sent to a control unit, followed by the sending from the control unit of a signal ordering overfilling of at least one compressed air reservoir.

The fact that the arrangement for and method of air pressure control for compressed air reservoirs comprise the characteristics of claims 1 and 9 respectively affords the advantage that the compressed air reservoir reverts to its normal working pressure more quickly after the pressure offtake, thereby improving the vehicle's ability to move off after the pressure offtake. Time which cannot otherwise be utilised is thus saved. Another advantage is that when accelerating from a stopping point the bus will more quickly match the pace of the traffic, thereby promoting traffic safety. What is also achieved is extra retardation in the form of "engine braking" before a bus stopping point, when the compressor utilises part of the engine's power at a time when the compressor operates at a high degree of efficiency due to high engine speed, in a situation where this braking effect would otherwise be converted to heat by the vehicle's brake system. There is also no need for one or more extra air reservoirs which might be another conceivable solution to the problem.

### Brief list of the drawings

The invention is illustrated below in more detail with reference to the attached drawings, in which:
Figure 1 depicts schematically a compressed air system for a bus,
Figure 2 depicts schematically a compressed air system for a tractor vehicle, and
Figure 3 depicts schematically a flowchart of an embodiment of the method according to the invention.

### Description of preferred embodiments

The same reference notations are used throughout for the same features in the various drawings,

The present invention relates to a compressed air system 2 for a vehicle 4 whereby the compressed air system 2 comprises at least one compressed air reservoir 12, a compressor 14 intended for filling the compressed air reservoir 12, and a control unit 16 regulating the filling of the compressed air reservoir 12. The compressed air system 2 further comprises a signal unit 18 initiating overfilling of the compressed air reservoir 12 before a compressed air offtake, so that the compressed air reservoir 12 reverts to its normal working pressure more quickly after the compressed air offtake. The invention is particularly applicable in compressed air systems 2 with a large air turnover, i.e. where the compressed air consumption is high.

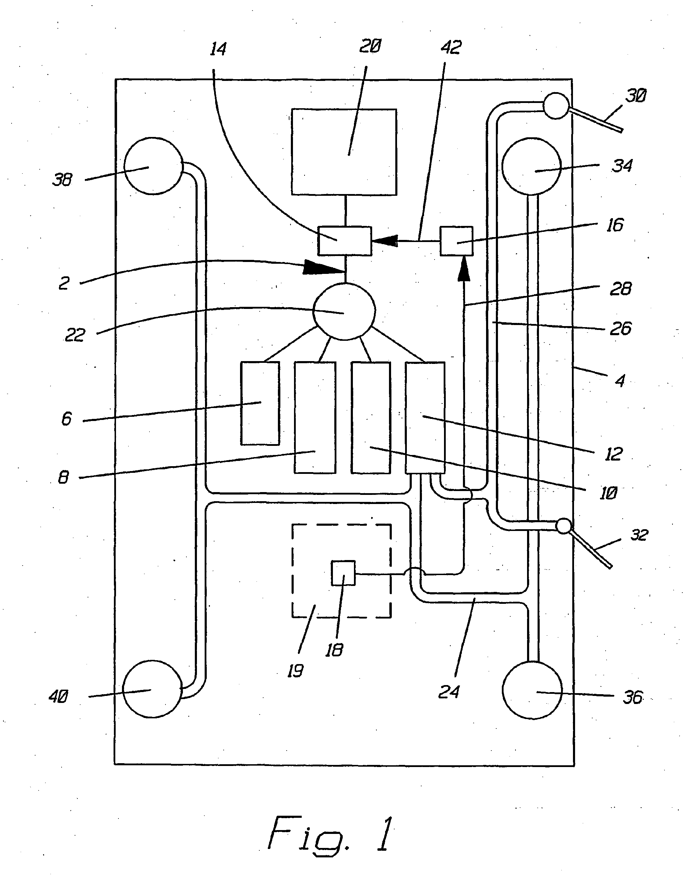

Figure 1 depicts schematically a compressed air system 2 for a bus 4. The compressed air system 2 comprises a compressor 14 driven by the engine 20 of the vehicle 4, a four-circuit distribution valve 22 which delivers air from the compressor 14 to at least one parking brake circuit air reservoir 6, at least one first (front axle) service brake circuit air reservoir 8, at least one second (rear axle) service brake circuit air reservoir 10, and at least one air reservoir 12 for other consumers such as an air suspension circuit 24 and/or a door operating circuit 26. The compressed air system 2 further comprises a preferably electronic control unit 16. The control unit may alternatively be arranged by means of relays and pressure switches. The compressed air circuit reservoirs 8,10,12, but not the parking brake circuit reservoir 6, which has a lower working pressure than the other compressed air reservoirs 8,10,12, are usually connected to one another when normal working pressure prevails in the reservoirs 8,10,12, but are separated when the pressure in at least one reservoir 8,10,12 is below a predetermined limit value, in order to prevent emptying of all the reservoirs 8,10,12 being caused by leakage in one compressed air circuit.

When a bus 4 approaches a stopping point, a passenger presses a stop signal button 18 in the passenger space 19 of the bus 4 in order to signal that he/she wishes to alight. When the stop signal button 18 is pressed, a signal 28 representing a future pressure offtake, i.e. for opening and closing of doors 30,32 and causing the whole or part of one side of the bus 4 to "kneel", is sent to the control unit 16. The control unit 16 receives this signal 28 and itself sends a signal 42 from the control unit 16 ordering the compressor 14 to overfill at least one compressed air reservoir 12. The compressed air reservoir 12 is thus overfilled by the time the bus 4 stops at the stopping point. Extra retardation in the form of "engine braking" may also occur before the bus stopping point, when the compressor 14 utilises part of the power of the engine 20 at a time when the compressor 14 operates at a high degree of efficiency due to high engine speed. This engine braking effect would otherwise be converted to heat by the vehicle's brake system (not depicted). After opening and closing of doors 30,32 and "kneeling" to facilitate passenger alighting and boarding, the air pressure in the air suspension 34,36,38,40 is reduced when the bus 4 has "kneeled". When the driver thereafter closes doors 30,32 of the bus 4, the air suspension 34,36,38,40 is refilled to its normal working pressure, thereby reducing the pressure in the overfilled compressed air reservoir 12 connected to the air suspension 34,36,38,40, preferably to its normal working pressure. The compressed air reservoir 12 thus reverts to its normal working pressure more quickly after the pressure offtake than if no overfilling of the compressed air reservoir 12 had been effected. Nor is the power available for accelerating from the stopping point limited by the compressor 14, since the compressor 14 is not in operation during departure from the stopping point, with the result that the bus 4 reaches more quickly the speed at which other traffic is moving in the same direction. The bus 4 thus matches the pace of the traffic more quickly, thereby promoting traffic safety. A signal unit 18 accessible to the driver may also be arranged, e.g. in the form of a button which, the driver can press when the bus is approaching a stopping point at which a passenger is waiting to board. The driver can thus likewise initiate overfilling of the compressed air reservoir 12 as above.

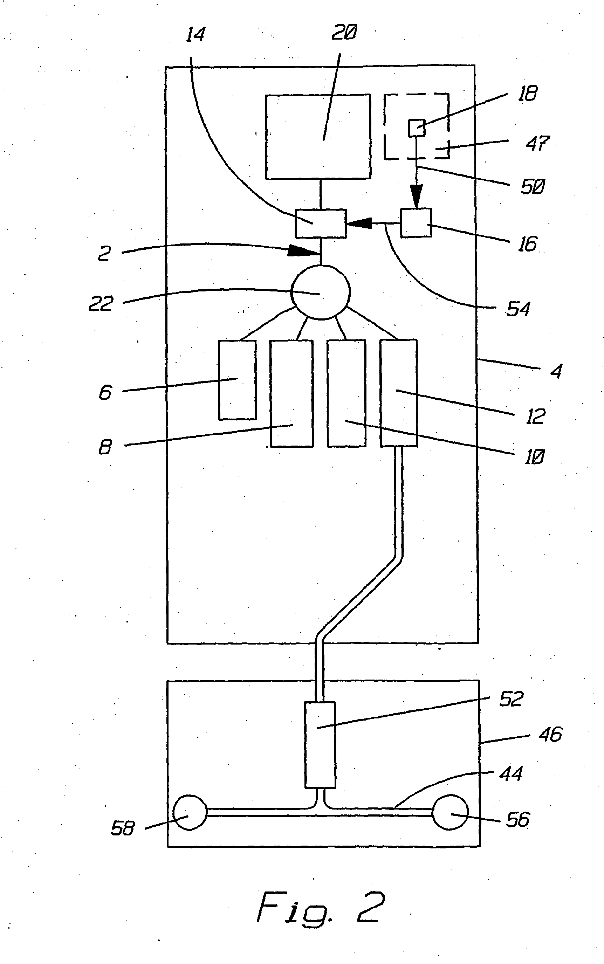

Figure 2 depicts schematically a compressed air system. 2 for a tractor vehicle 4. A tractor vehicle 4 means here any kind of vehicle to which a trailer can be coupled. The compressed air system 2 comprises a compressor 14 driven by the engine 20 of the vehicle 4, a four-circuit distribution valve 22 which delivers air from the compressor 14 to at least one parking brake circuit air reservoir 6, at least one first (front axle) service brake circuit air reservoir 8, at least one second (rear axle) service brake circuit air reservoir 10, and at least one air reservoir 12 for other consumers such as an air suspension circuit (see Figure 1) and/or a brake circuit 44 for a trailer 46. The compressed air system 2 further comprises a control unit 16: The compressed air circuit reservoirs 8,10,12, but not the parking brake circuit reservoir 6, which has a lower working pressure than the other compressed air reservoirs 8,10,12, are usually connected to one another when normal working pressure prevails in the reservoirs 8,10,12, but are separated when the pressure in at-least one reservoir 8,10,12 is below a predetermined limit value, in order to prevent emptying of al the reservoirs 8,10,12 being caused by leakage in one compressed air circuit.

When a tractor vehicle 4 is approaching a point where a trailer 46 which is to be coupled to the tractor vehicle 4 is standing, a person in the driving cab 47 of the tractor vehicle 4 presses a trailer coupling button 18 to signal that coupling of a trailer 46 is to be effected soon. When the trailer coupling button 18 is pressed, a signal 50 representing a future pressure offtake, i.e. for filling at least one compressed air reservoir 52 of the trailer 46, is sent to the control unit 16. The control unit 16 receives this signal 50 and itself sends a signal 54 from the control unit 16 ordering the compressor 14 to overfill at least one compressed air reservoir 12 of the tractor vehicle 4. The compressed air reservoir 12 is thus overfilled when the tractor vehicle 4 stops in order to couple the trailer 46. When the trailer 46 is coupled, at least one compressed air reservoir 52 of the trailer 46 is filled, preferably to its normal working pressure, which can for example be reached if the compressed air reservoir 52 of the trailer 46 is not entirely empty, thereby reducing the pressure in the overfilled compressed air reservoir 12 in the tractor vehicle 4, preferably to its normal working pressure. The compressed air reservoir 12 in the tractor vehicle 4 thus reverts to its normal working pressure more quickly after the pressure offtake than if no overfilling of the compressed air reservoir 12 of the tractor vehicle 4 had been effected. Thus parking brakes 56,58 of the trailer 46 can be released more quickly, since a sufficient pressure level is reached more quickly, which means that the ability of the vehicle 4 to move off after the pressure offtake is improved. Time which cannot otherwise be utilised is thereby saved.

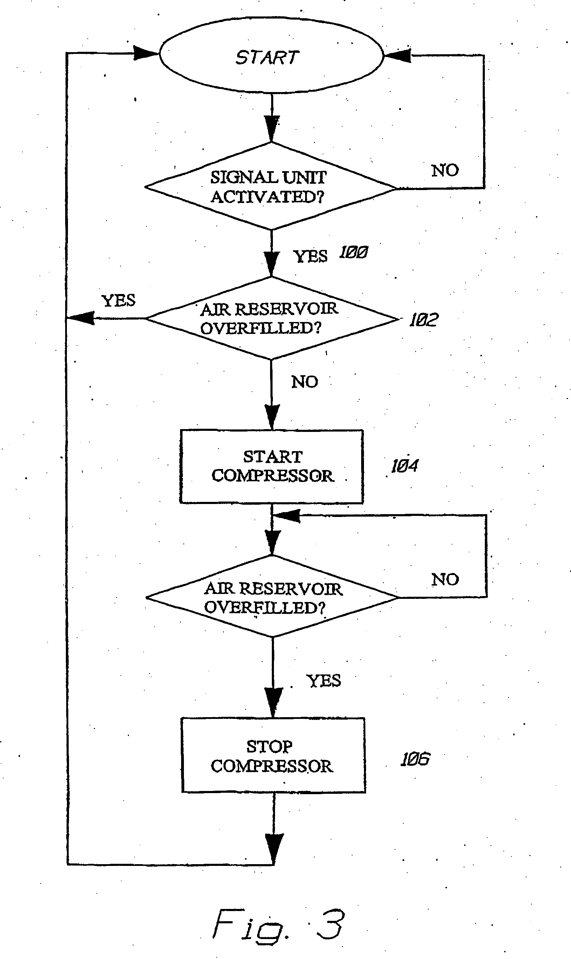

Figure 3 depicts schematically a flowchart of an embodiment of the method according to the invention. The flowchart illustrates a method for air pressure control for vehicles with compressed air systems, whereby the compressed air system is prepared for future pressure offtake, A control unit supervises the method. The control unit is forewarned of a desired future pressure offtake by a person activating (100) a signal unit. When the signal unit is activated, a signal representing a future pressure offtake is sent to the control unit. When the control unit has received said signal, the control unit does a check (102) on the degree to which the compressed air reservoir from which the pressure offtake is to take place is overfilled. If such is not the case, the control unit sends the compressor a signal ordering overfilling of said at least one compressed air reservoir, whereupon the compressor starts up. When the air in said, compressed air reservoir reaches the desired overfilling pressure, the compressor switches off (106) and the control unit reverts to monitoring whether the control unit is activated or not. The compressed air reservoir thus reverts to its normal working pressure more quickly after the pressure offtake.

The scope of the invention is not confined solely to the preferred embodiment exemplified but is determined by the claims set out below. Thus, for example, the signal unit, instead of being arranged in the form of a button on the vehicle, may be a unit on the vehicle which automatically, e.g. via a GPS system, detects the vehicle's approach to a stopping point or a trailer coupling location and thereafter automatically sends a signal to the control unit.

## Claims

1. A compressed air system for vehicles whereby the compressed air system (2) comprises at least one compressed air reservoir (12), a compressor (14) intended for filling the compressed air reservoir, and a control unit (16) regulating the filling of the compressed air reservoir (12), **characterised in that** the compressed air system (2) further comprises a signal unit (18) designed to when activated send a signal (28) representing a future pressure offtake to the control unit (16) and thereby initiating overfilling of the compressed air reservoir before a compressed air offtake, so that the compressed air reservoir reverts to its normal working pressure more quickly after the compressed air offtake.

2. A compressed air system according to claim 1, **characterised in that** the compressed air system (2) comprises a distribution valve (22) which delivers air from the compressor (14) to at least one parking brake circuit air reservoir (6), at least one first service brake circuit air reservoir (8), at least one second service brake circuit air reservoir (10) and at least one air reservoir (12) for other consumers.

3. A compressed air system according to claim 2, **characterised in that** the air reservoir (12) for other consumers serves at least one air suspension circuit (24).

4. A compressed air system according to any one of the foregoing claims, **characterised in that** the compressed air offtake is effected when the vehicle (4) is caused to "kneel".

5. A compressed air system according to any one of the foregoing claims, **characterised in that** the signal unit (18) is a stop signal button in a passenger space (19) in a bus (4).

6. A compressed air system according to claim 2, **characterised in that** the air reservoir (12) for other consumers serves at least one brake circuit (44) for a trailer (46).

7. A compressed air system according to any one of claims 1, 2 or 6, **characterised in that** the compressed air offtake is effected when filling an air reservoir (52) in a trailer (46).

8. A compressed air system according to any one of the foregoing claims, **characterised in that** the signal unit (18) is a trailer coupling button in a tractor vehicle cab (47).

9. A method for air pressure control for vehicles with compressed air systems, whereby the compressed air system is prepared for future pressure offtake, **characterised by** the steps of:
- activating (100) a signal unit,
- sending from the signal unit to a control unit a signal (28, 50) representing a future pressure offtake, and
- sending a signal from the control unit to a compressor ordering overfilling of at least one compressed air reservoir, so that the compressed air reservoir reverts to its normal working pressure more quickly after the pressure offtake.

## Patentansprüche

1. Druckluftsystem für Fahrzeuge, wobei das Druckluftsystem (2) wenigstens einen Druckluftspeicher (12), einen bestimmungsgemäß den Druckluftspeicher füllenden Kompressor (14) und eine Steuereinheit (16) zum Regeln der Füllung des Druckluftspeichers (12) aufweist,
**dadurch gekennzeichnet, dass** das Druckluftsystem (2) ferner eine Signaleinheit (18) aufweist, die falls aktiviert, dazu ausgebildet ist, ein eine zukünftige Druckableitung verkörperndes Signal zu der Steuereinheit (16) zu senden und **dadurch** eine Überfüllung des Druckluftspeichers vor einer Druckluftableitung zu initiieren, so dass der Druckluftspeicher schnell zu seinem normalen Arbeitsdruck nach der Druckluftableitung zurückkehrt.

2. Druckluftsystem nach Anspruch 1,
**dadurch gekennzeichnet, dass** das Druckluftsystem (2) ein Verteilerventil (22) aufweist, das Luft von dem Kompressor (14) wenigstens einem Luftspeicher für einen Parkbremskreis (6), wenigstens einem ersten Luftspeicher für den Betriebsbremskreis (8), wenigstens einem zweiten Luftspeicher für einen Betriebsbremskreis (10) und wenigstens einem Luftspeicher (12) für andere Verbraucher zuführt.

3. Druckluftsystem nach Anspruch 2,
**dadurch gekennzeichnet, dass** der Luftspeicher (12) für andere Verbraucher wenigstens einen Luftfederungskreis (24) versorgt.

4. Druckluftsystem nach einem der vorangehenden Ansprüche,
**dadurch gekennzeichnet, dass** die Druckluftableitung bewirkt wird, falls das Fahrzeug (4) zum "Knien" gebracht wird.

5. Druckluftsystem nach einem der vorangehenden Ansprüche,
**dadurch gekennzeichnet, dass** die Signaleinheit (18) eine Stoppsignaltaste in einem Fahrgastraum (19) in einem Bus (4) ist.

6. Druckluftsystem nach Anspruch 2,
**dadurch gekennzeichnet, dass** der Luftspeicher (12) für andere Verbraucher wenigstens einen Bremskreis (44) für einen Auflieger (46) versorgt.

7. Druckluftsystem nach einem der vorangehenden Ansprüche 1, 2 oder 6,
**dadurch gekennzeichnet, dass** die Druckluftableitung bewirkt wird, wenn ein Luftspeicher (52) in einem Auflieger (46) gefüllt wird.

8. Druckluftsystem nach einem der vorangehenden Ansprüche,
**dadurch gekennzeichnet, dass** die Signaleinheit (18) eine Aufliegerkupplungstaste in einer Zugmaschinenkabine (47) ist.

9. Verfahren zur Luftdrucksteuerung für Fahrzeuge mit Druckluftsystemen, wobei das Druckluftsystem für zukünftige Druckableitungen ausgelegt ist, **gekennzeichnet durch** die Schritte:
- Aktivieren einer Signaleinheit (100),
- Senden eines eine zukünftige Druckableitung verkörpernden Signals (28, 50) von der Signaleinheit zu einer Steuereinheit, und
- Senden eines Signals von der Steuereinheit zu einem Kompressor, das eine Überfüllung des wenigstens einen Druckluftspeichers auslöst, so dass der Druckluftspeicher schnell zu seinem normalen Arbeitsdruck nach der Druckableitung zurückkehrt.

## Revendications

1. Système d'air comprimé pour véhicules, où le système d'air comprimé (2) comprend au moins un réservoir d'air comprimé (12), un compresseur (14) destiné à remplir le réservoir d'air comprimé, et une unité de commande (16) régulant le remplissage du réservoir d'air comprimé (12), **caractérisé en ce que** le système d'air comprimé (2) comprend, en outre, une unité de signalisation (18) conçue pour, lorsqu'elle est activée, envoyer à l'unité de commande (16) un signal (28) représentant un futur prélèvement de pression, et ainsi démarrer un sur-remplissage du réservoir d'air comprimé avant un prélèvement d'air comprimé, de telle sorte que le réservoir d'air comprimé revienne plus rapidement à sa pression de travail normale après le prélèvement d'air comprimé.

2. Système d'air comprimé selon la revendication 1, **caractérisé en ce que** le système d'air comprimé (2) comprend une vanne de distribution (22) qui délivre de l'air du compresseur (14) vers au moins un réservoir d'air de circuit de frein de stationnement (6), au moins un réservoir d'air de premier circuit de frein de service (8), au moins un réservoir d'air de deuxième circuit de frein de service (10), et au moins un réservoir d'air (12) pour d'autres consommateurs.

3. Système d'air comprimé selon la revendication 2, **caractérisé en ce que** le réservoir d'air (12) pour d'autres consommateurs dessert au moins un circuit de suspension pneumatique (24).

4. Système d'air comprimé selon l'une quelconque des revendications précédentes, **caractérise en ce que** le prélèvement d'air comprimé est effectué lorsque le véhicule (4) est amené à "s'agenouiller".

5. Système d'air comprimé selon l'une quelconque des revendications précédentes, **caractérisé en ce que** l'unité de signalisation (18) est un bouton de signalisation d'arrêt dans un espace passagers (19) d'un autobus (4).

6. Système d'air comprimé selon la revendication 2, **caractérisé en ce que** le réservoir d'air (12) pour d'autres consommateurs dessert au moins un circuit de frein (44) pour une remorque (46).

7. Système d'air comprimé selon l'une quelconque des revendications 1, 2 ou 6, **caractérisé en ce que** le prélèvement d'air comprimé est effectué lors du remplissage d'un réservoir d'air (52) dans une remorque (46).

8. Système d'air comprimé selon l'une quelconque des revendications précédentes, **caractérisé en ce que** l'unité de signalisation (18) est un bouton de couplage de remorque dans une cabine de véhicule tracteur (47).

9. Procédé de commande de pression d'air pour des véhicules ayant des systèmes d'air comprimé, où le système d'air comprimé est préparé pour un futur prélèvement de pression, **caractérisé par** les étapes qui consistent à :
- activer (100) une unité de signalisation,
- envoyer de l'unité de signalisation à une unité de commande un signal (28, 50) représentant un futur prélèvement de pression, et
- envoyer de l'unité de commande à un compresseur un signal donnant un ordre de sur-remplissage d'au moins un réservoir d'air comprimé, de telle sorte que le réservoir d'air comprimé revienne plus rapidement à sa pression de travail normale après le prélèvement d'air comprimé.
